# EUROPEAN PATENT SPECIFICATION

(11) **EP 0 882 562 B1**
(45) Date of publication and mention of the grant of the patent: **05.09.2001**
(21) Application number: 97109150.9
(22) Date of filing: 05.06.1997
(51) Int. Cl.: B29C 45/26

(54) **Disc molding die**
Giessform für eine Platte
Moule pour former un disque

(43) Date of publication of application: 09.12.1998
(73) Proprietor: SEIKOH GIKEN Co., Ltd., Matsudo-shi, Chiba 270 (JP); SUMITOMO HEAVY INDUSTRIES, LTD., Shinagawa-ku, Tokyo 141-8686 (JP)
(72) Inventor: Sakamoto, Yasuyoshi, Kamagaya-shi, Chiba 273-01 (JP); Hatano, Akira, Ichihara-shi, Chiba 290 (JP)
(74) Representative: Boeters, Hans Dietrich, Dr.

(56) References cited:
- PATENT ABSTRACTS OF JAPAN vol. 97, no. 3, 31 March 1997 & JP 08 309804 A (MEIKI CO LTD), 26 November 1996,
- PATENT ABSTRACTS OF JAPAN vol. 96, no. 2, 29 February 1996 & JP 07 266378 A (TOSHIBA EMI LTD), 17 October 1995,
- PATENT ABSTRACTS OF JAPAN vol. 97, no. 3, 31 March 1997 & JP 08 300421 A (PIONEER ELECTRON CORP;PIONEER VIDEO CORP), 19 November 1996,
- PATENT ABSTRACTS OF JAPAN vol. 95, no. 1, 28 February 1995 & JP 06 293047 A (SONY CORP), 21 October 1994,

## Description

The present invention relates to a disc molding die in accordance with the preamble of claim 1.

Conventionally, when a product is molded in an injection molding machine, resin supplied to a heating cylinder is heated and melted therein and then charged into a mold cavity formed in a molding die. The molten resin is then cooled and hardened to obtain the molded product.

Where the products to be molded are discs such as optical disc substrates, a corresponding disc molding die is composed of a stationary die assembly and a movable die assembly. A die clamping apparatus causes a movable mirror-surface plate of the movable die assembly to contact a and separate from a stationary mirror-surface plate of the stationary die assembly, thereby performing die closing, die clamping and die opening. However, in the conventional disc molding die, the mirror-surface plates must be replaced whenever discs having a different thickness are to be molded. Therefore, separate mirror-surface plates must be made for each kind of disc. In addition, since e.g. optical discs are required to have excellent optical characteristics, accuracy of the mirror-surface plates, as measured by, for example, surface roughness and dimensional accuracy, must be high. As a result also the cost of the disc molding die is high, and a prolonged period of time is required to manufacture any such disc molding die. Moreover, for replacement of the mirror-surface plates, the following operations must be carried out:

First, the stationary die assembly and the movable die assembly are to be removed from the die clamping apparatus. Then the respective mirror-surface plates are to be replaced by other mirror-surface plates. Subsequently the stationary die assembly and the movable die assembly are to be attached to the die clamping apparatus. In addition, the replacement of the mirror-surface plates requires disconnection and reconnection of pipes for water, air etc.. Accordingly, the operations involved in the replacement of the mirror-surface plates are troublesome and greatly decrease the productivity of the injection molding machine.

JP 08 309 804 A discloses a disc molding die according to the preamble of claim 1 wherein replacement of the mirror-surface plates is unnecessary. In this disc molding die one of the mirror-surface plates is slidably surrounded by a plate member termed "stamper holder" and forming the peripheral wall of the mold cavity, whereas the thickness of the mold cavity is determined by the thickness of a thickness adjusting ring enclosed between the movable guide ring and the movable base plate. Where discs of another thickness have to be produced, simply this thickness adjusting ring has to be replaced by another one having a different thickness instead of replacing any mirror-surface plate. However, in this structure, due to the sliding motion of the movable mirror-surface plate along the surrounding wall of the stamper holder whenever the die is opened and closed, abrasion occurs and, as a consequence, loss of tightness of the mold cavity.

It is, therefore, the primary object of the present invention to avoid any such friction that could affect the tightness of the mold cavity.

This is achieved, according to the present invention, in a disc molding die in accordance with the preamble of claim 1 by the characterizing features of claim 1. The dependent claims concern advantageous embodiments of the invention specified in claim 1.

To provide a thickness adjusting ring in the form of a cavity ring that is detachably attached to one of the mirror-surface plates so that it projects against the other mirror-surface plate to contact the latter in the die clamping state, the thickness of the mold cavity is precisely determined without any friction occurring that could affect the tightness of the mold cavity. Abutment position adjusting means in addition to and separate from the cavity ring contribute to determine the die clamping position, at the same time protecting the cavity ring from overload.

In the following, some embodiments of the present invention are described in detail by way of example in connection with the accompanying drawings. In the latter:
FIG. 1 is a sectional view of a disc molding die according to a first embodiment of the present invention;
FIG. 2 is a view showing a first state of the abutment position adjusting means in the first embodiment of the present invention;
FIG. 3 is a view showing a second state of the abutment position adjusting means in the first embodiment of the present invention;
FIG. 4 is a view showing a first state of the disc moldig die in a second embodiment of the present invention;
FIG. 5 is a view showing a second state of the disc molding die in the second embodiment of the present invention;
FIG. 6 is a view showing a first state of the abutment position adjusting means in a third embodiment of the present invention;
FIG. 7 is a view showing a second state of the abutment position adjusting means in the third embodiment of the present invention;
FIG. 8 is a view showing a first state of the abutment position adjusting means in a fourth embodiment of the present invention;
FIG. 9 is a view showing a second state of the abutment position adjusting means in the fourth embodiment of the present invention;
FIG. 10 is a view showing a first state of the abutment position adjusting means in a fifth embodiment of the present invention; and
FIG. 11 is a view showing a second state of the abutment position adjusting means in the fifth embodiment of the present invention.

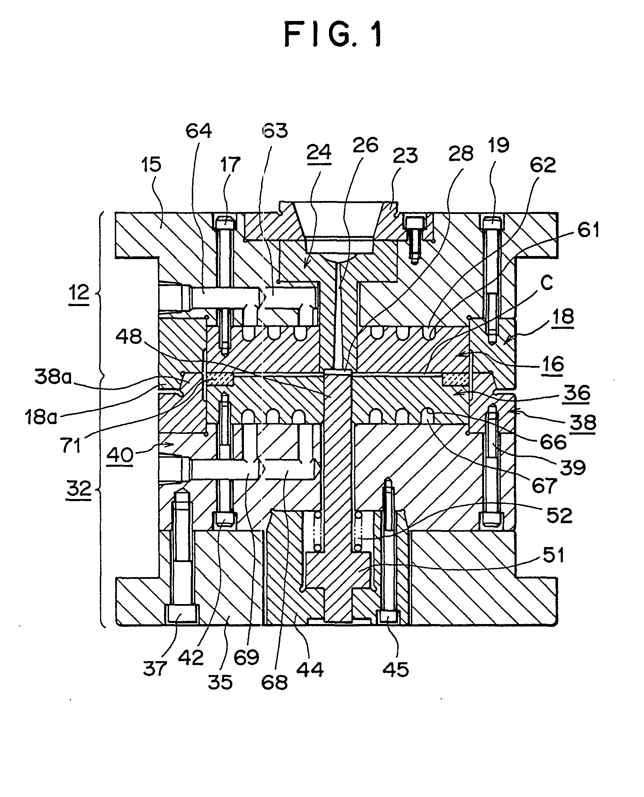

In FIG. 1, numeral 12 denotes a stationary die assembly that is attached to an unillustrated stationary platen with bolts. The stationary die assembly 12 is composed of a base plate 15, a mirror-surface plate 16 fixed to the base plate 15 with bolts 17, an annular guide ring 18 disposed to surround the mirror-surface plate 16 and fixed to the base plate 15 with bolts 19, a locating ring 23 that is disposed on the stationary-platen side of the base plate 15 so as to locate the base plate 15 with respect to the stationary platen, and a sprue bush 24 disposed adjacent to the locating ring 23.

At the center of the sprue bush 24 is formed a sprue 26 through which resin injected from an unillustrated injection nozzle passes. The sprue bush 24 is disposed such that its tip end faces a cavity C, and a cut die 28 is formed in the end surface of the sprue bush 24.

Moreover, unillustrated stamper plate attachment/removal bushes, a stationary-side air-blow bush, and the like are disposed on the stationary die assembly 12.

Numeral 32 denotes a movable die assembly that is attached to an unillustrated movable platen with bolts. The movable die assembly 32 is composed of a base plate 35, an intermediate plate 40 fixed to the base plate 35 with bolts 37, a mirror-surface plate 36 fixed to the intermediate plate 40 with bolts 42, an annular guide ring 38 disposed to surround the mirror-surface plate 36 and fixed to the intermediate plate 40 with bolts 39, a cylinder 44 that is disposed within the base plate 35 so as to face the movable platen and fixed to the base plate 35 with bolts 45, and a cut punch 48 that is advanced and retracted by the cylinder 44 and that has a shape corresponding to the cut die 28.

Moreover, on the surface of the mirror-surface plate 36 facing the mirror-surface plate 16 is disposed an annular cavity ring 71 that extends along the outer circumferential edge of the surface. The annular cavity ring 71 is fixed to the mirror-surface plate 36 with unillustrated bolts and projects toward the mirror-surface plate 16 by an amount corresponding to the thickness of a disc to be molded. As a result, a concave portion is formed on the radially inner-side of the cavity ring 71. When the movable platen is moved toward the stationary platen through an operation of an unillustrated die clamping apparatus and the cavity ring 71 is brought into contact with the mirror-surface plate 16, the concave portion forms the cavity C.

A piston 51 integrally formed with the cut punch 48 is reciprocatively disposed within the cylinder 44. An oil chamber is formed on the rear side (movable-platen side) of the piston 51. On the front side (upper side in FIG. 1) of the piston 51, a cut-punch returning spring 52 is disposed in order to urge the piston 51 rearward.

In the disc molding die having the above-described structure, when the movable platen is moved toward the stationary platen through operation of the die clamping apparatus, the guide ring 38 coincides with the guide ring 18, so that the cavity ring 71 is centered with respect to the mirror-surface plate 16, therby performing the die clamping. In the die clamp state, molten resin is charged into the cavity C via the sprue 26, and is then cooled and hardened to obtain a molded product.

In order to coincide the guide ring 38 with the guide ring 18 as described above, an annular projection 18a is formed on the guide ring 18 at its outer circumferential side, while an annular projection 38a is formed on the guide ring 38 at its inner circumferential side.

Subsequently, when the piston 51 is advanced (moved upward in FIG. 1) by supplying an oil to the above-mentioned oil chamber, the cut punch 48 is advanced, so that the tip end of the cut punch 48 enters the cut die 28. As a result, a hole is formed in the product in the cavity C, whereby the center portion of the disc is removed.

Unillustrated ejector bushes, ejector pins, a movable-side air-blow bush, and the like are also disposed on the movable die assembly 32.

In the surface of the mirror-surface plate 16, which surface faces the base plate 15, grooves 61 is formed in an appropriate pattern. The grooves 61 are covered by the base plate 15 so as to form cooling water passages 62. The cooling water passages 62 are connected to an unillustrated cooling water system via an inlet manifold 63 and an outlet manifold 64.

Similarly, in the surface of the mirror-surface plate 36, which surface faces the intermediate plate 40, grooves 66 are formed in an appropriate pattern. The grooves 66 are covered by the intermediate plate 40 so as to form cooling water passages 67. The cooling water passages 67 are connected to the cooling water system via an inlet manifold 68 and an outlet manifold 69.

In order to prevent cooling water from leaking from the cooling water passages 62 and 67, the inlet manifolds 63 and 68, and the outlet manifolds 64 and 69, sealing is provided by unillustrated 0-rings.

In the disc molding die having the above-described structure, different discs having different thicknesses can be molded without replacinng the mirror-surface plate 16, the cut die 28, etc. of the stationary die assembly 12 and the mirror-surface plate 36, the cut punch 48, etc. of the movable die assembly 32. To this end, the thickness of the cavity ring 71 can be changed, and abutment position adjusting means is provided so as to adjust the abutment position between the guide rings 18 and 38 in accordance with the thickness of the cavity ring 71.

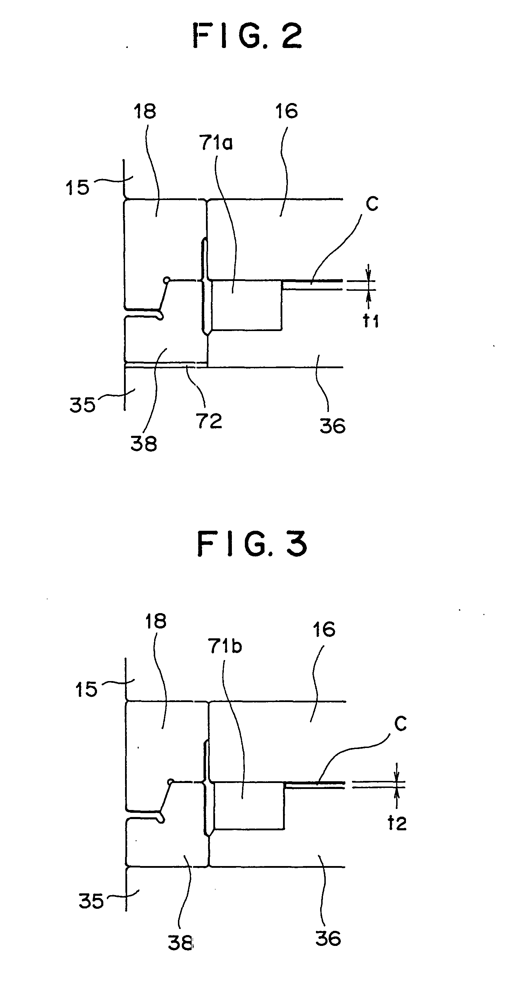

FIG. 2 is a view showing a first state of the abutment position adjusting means in the first embodiment of the present invention, and FIG. 3 is a view showing a second state of the abutment position adjusting means in the first embodiment of the present invention.

In these drawings, numerals 15 and 35 denote the base plates, numerals 16 and 36 denote the mirror-surface plates, numerals 18 and 38 denote the guide rings, numeral 71a denotes a thick-type cavity ring, numeral 71b denotes a thin-type cavity ring, and numeral 72 denotes an annular guide ring spacer. The guide ring spacer 72 serves as the abutment position adjusting means.

When a disc to be molded is thick, the cavity ring 71a is attached to the mirror-surface plate 36, and the guide ring spacer 72 is disposed between the guide ring 38 and the base plate 35, as shown in FIG. 2. As a result, the amount of projection of the cavity ring 71a from the mirror-surface plate 36 increases, so that the thickness of the cavity C becomes t1.

When a disc to be molded is thin, the cavity ring 71b is attached to the mirror-surface plate 36, and the guide ring 38 is brought into close contact with the base plate 35, as shown in FIG. 3. As a result, the amount of projection of the cavity ring 71b from the mirror-surface plate 36 decreases, so that the thickness of the cavity C becomes t2.

As described above, when the cavity rings 71a and 72b having different thicknesses are used, the abutment position between the guide rings 18 and 38 is adjusted by the guide ring spacer 72 in accordance with the thickness of the cavity ring 71a or 72b. As a result, the thickness of the cavity C can be changed without replacing the mirror-surface plates 16 and 36.

Since it is unnecessary to make the mirror-surface plates 16 and 36 for each kind of disc, the cost of the disc molding die can be lowered, and the period of time required to manufacture the disc molding die can be shortened.

In addition, it is unnecessary to remove the stationary and movable die assemblies 12 and 32 from the die clamping apparatus and attach different stationary and movable die assemblies to the die clamping apparatus, and to disconnect and reconnect pipes for water, air, etc., in order to dispose the guide ring spacer 72. Accordingly, the operations can be simplified and the productivity of the injection molding machine can be improved.

Next, a second embodiment of the present invention will be described.

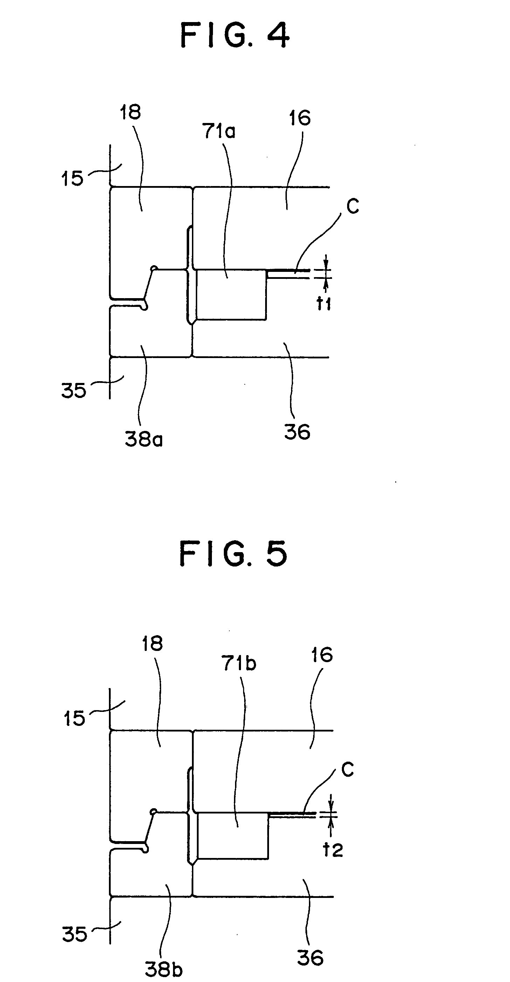

FIG. 4 is a view showing a first state of the disc molding die in the second embodiment of the present invention; and FIG. 5 is a view showing a second state of the disc molding die in the second embodiment of the present invention.

In these drawings, numerals 15 and 35 denote the base plates, numerals 16 and 36 denote the mirror-surface plates, numeral 18 denotes the guide ring, numeral 38a denotes a thick-type guide ring, numeral 38b denotes a thin-type guide ring, numeral 71a denotes the thick-type cavity ring, and numeral 71b denotes the thin-type cavity ring.

When a disc to be molded is thick, the cavity ring 71a is attached to the mirror-surface plate 36, and the guide ring 38a is attached to the base plate 35, as shown in FIG. 4. As a result, the amount of projection of the cavity ring 71a from the mirror-surface plate 36 increases, so that the thickness of the cavity C becomes t1.

When a disc to be molded is thin, the cavity ring 71b is attached to the mirror-surface plate 36, and the guide ring 38b is attached to the base plate 35, as shown in FIG. 5. As a result, the amount of projection of the cavity ring 71b from the mirror-surface plate 36 decreases, so that the thickness of the cavity C becomes t2.

Next, a third embodiment of the present invention will be described.

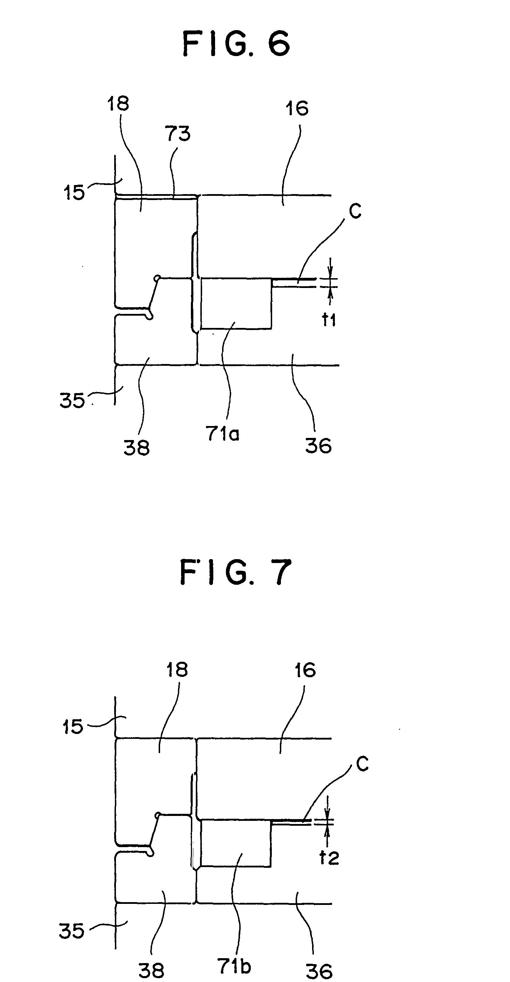

FIG. 6 is a view showing a first state of the abutment position adjusting means in the third embodiment of the present invention, and FIG. 7 is a view showing a second state of the abutment position adjusting means in the third embodiment of the present invention.

In these drawings, numerals 15 and 35 denote the base plates, numerals 16 and 36 denote the mirror-surface plates, numerals 18 and 38 denote the guide rings, numeral 71a denotes the thick-type cavity ring, numeral 71b denotes the thin-type cavity ring, and numeral 73 denotes an annular guide ring spacer. The guide ring spacer 73 serves as the abutment position adjusting means.

When a disc to be molded is thick, the cavity ring 71a is attached to the mirror-surface plate 36, and the guide ring spacer 73 is disposed between the guide ring 18 and the base plate 15, as shown in FIG. 6. As a result, the amount of projection of the cavity ring 71a from the mirror-surface plate 36 increases, so that the thickness of the cavity C becomes t1.

When a disc to be molded is thin, the cavity ring 71b is attached to the mirror-surface plate 36, and the guide ring 18 is brought into close contact with the base plate 15, as shown in FIG. 7. As a result, the amount of projection of the cavity ring 71b from the mirror-surface plate 36 decreases, so that the thickness of the cavity C becomes t2.

Next, a fourth embodiment of the present invention will be described.

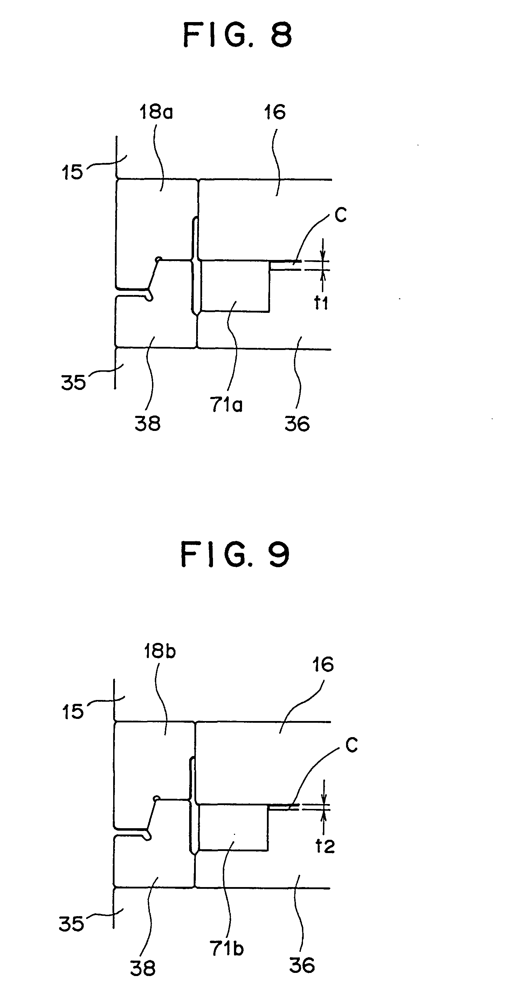

FIG. 8 is a view showing a first state of the abutment position adjusting means in the fourth embodiment of the present invention, and FIG. 9 is a view showing a second state of the abutment position adjusting means in the fourth embodiment of the present invention.

In these drawings, numerals 15 and 35 denote the base plates, numerals 16 and 36 denote the mirror-surface plates, numeral 18a denotes a thick-type guide ring, numeral 18b denotes a thin-type guide ring, numeral 38 denotes the guide ring, numeral 71a denotes the thick-type cavity ring, and numeral 71b denotes the thin-type cavity ring. The guide rings 18a and 18b serve as the abutment position adjusting means.

When a disc to be molded is thick, the cavity ring 71a is attached to the mirror-surface plate 36, and the guide ring 18a is attached to the base plate 15, as shown in FIG. 8. As a result, the amount of projection of the cavity ring 71a from the mirror-surface plate 36 increases, so that the thickness of the cavity C becomes t1.

When a disc to be molded is thin, the cavity ring 71b is attached to the mirror-surface plate 36, and the guide ring 18b is attached to the base plate 15, as shown in FIG. 9. As a result, the amount of projection of the cavity ring 71b from the mirror-surface plate 36 decreases, so that the thickness of the cavity C becomes t2.

Next, a fifth embodiment of the present invention will be described.

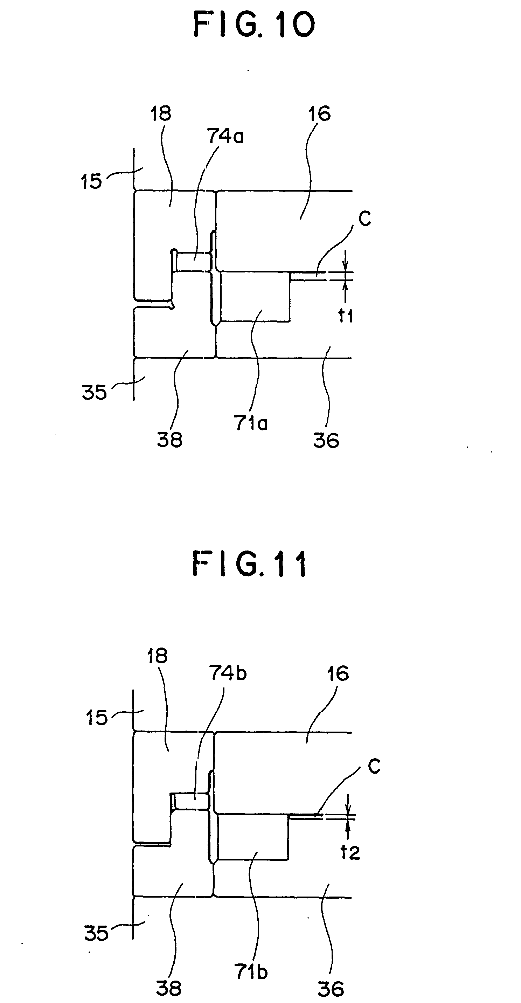

FIG. 10 is a view showing a first state of the abutment position adjusting means in the fifth embodiment of the present invention, and FIG. 11 is a view showing a second state of the abutment position adjusting means in the fifth embodiment of the present invention.

In these drawings, numerals 15 and 35 denote the base plates, numerals 16 and 36 denote the mirror-surface plates, numerals 18 and 38 denote the guide rings, numeral 71a denotes the thick-type cavity ring, numeral 71b denotes the thin-type cavity ring, numeral 74a denotes an annular thick-type guide ring spacer, and numeral 74b denotes an annular thin-type guide ring spacer. The guide ring spacers 74a and 74b serve as the abutment position adjusting means.

When a disc to be molded is thick, the cavity ring 71a is attached to the mirror-surface plate 36, and the guide ring spacer 74a is attached to the guide ring 18, as shown in FIG. 10. As a result, the amount of projection of the cavity ring 71a from the mirror-surface plate 36 increases, so that the thickness of the cavity C becomes t1.

When a disc to be molded is thin, the cavity ring 71b is attached to the mirror-surface plate 36, and the guide ring spacer 74b is attached to the guide ring 18, as shown in FIG. 11. As a result, the amount of projection of the cavity ring 71b from the mirror-surface plate 36 decreases, so that the thickness of the cavity C becomes t2.

The present invention is not limited to the above-described embodiments. Numerous modifications and variations of the present invention are possible in light of the spirit of the present invention, and they are not excluded from the scope of the present invention.

## Claims

1. A disc molding die comprising:
(a) a stationary platen;
(b) a movable platen disposed so as to face said stationary platen and adopted to be advanced and retracted by a die clamping apparatus:
(c) a stationary base plate (15) attached to said stationary platen;
(d) a movable base plate (35) attached to said movable platen;
(e) a stationary mirror-surface plate (16) attached to said stationary base plate (15);
(f) a movable mirror-surface plate (36) attached to said movable base plate (35);
(g) a mold cavity (C) existing, in a die clamping state, between said two mirror-surface plates (16, 36);
(h) a stationary guide ring (18) attached to said stationary base plate (15) so as to surround said stationary mirror-surface plate (16);
(i) a movable guide ring (38) attached to said movable base plate (35) so as to surround said movable mirror-surface plate (36) and adapted to contact said stationary guide ring (18) in said die clamping state; and
(j) a replaceable thickness adjusting ring arranged for being enclosed between said base plates (15, 35) for determining the thickness of said mold cavity (C),
**characterized in**
**that** said thickness adjusting ring, in the form of a cavity ring (71), is detachably attached to one of said mirror-surface plates (16, 36) in a way to project against the other of said mirror-surface plates (16, 36) and to contact said other mirror-surface plate, and
that abutment position adjusting means are provided separately from said cavity ring (71) for adjusting the relative position of said guide rings (18, 38) in said die clamping state in accordance with the thickness of said thickness adjusting ring.

2. The disc molding die of claim 1, wherein said abutment position adjusting means comprise one of said guide rings (18, 38), this guide ring being replaceable by a different one in accordance with the thickness of said cavity ring (71) .

3. The disc molding die of claim 1. wherein said abutment position adjusting means consist of a guide ring spacer (72; 73) that is removably disposed between one of said guide rings (18, 38) and the corresponding base plate (35; 15).

4. The disc molding die of claim 1, wherein said abutment position adjusting means consist of a guide ring spacer (74a; 74b) that is removably disposed between said guide rings (18, 38) .

## Patentansprüche

1. Platten-Gießform mit:
(a) einer feststehenden Formplatte;
(b) einer beweglichen Formplatte, die so angeordnet ist, daß sie zur feststehenden Formplatte weist, und so gewählt ist, daß sie durch eine Formklemmvorrichtung vorgeschoben und eingezogen wird;
(c) einer feststehenden Grundplatte (15), die an der feststehenden Formplatte angebracht ist;
(d) einer beweglichen Grundplatte (35), die an der beweglichen Formplatte angebracht ist;
(e) einer feststehenden Spiegeloberflächen-Platte (16), die an der feststehenden Grundplatte (15) angebracht ist;
(f) einer beweglichen Spiegeloberflächen-Platte (36), die an der beweglichen Grundplatte (35) angebracht ist;
(g) einem Gießhohlraum (C), der in einem Formklemmungszustand zwischen den beiden Spiegeloberflächen-Platten (16, 36) vorhanden ist;
(h) einem feststehenden Führungsring (18), der an der feststehenden Grundplatte (15) angebracht ist, so daß er die feststehende Spiegeloberflächen-Platte (16) umgibt;
(i) einem beweglichen Führungsring (38), der an der beweglichen Grundplatte (35) angebracht ist, so daß er die bewegliche Spiegeloberflächen-Platte (36) umgibt, und angepaßt ist, den feststehenden Führungsring (18) im Formklemmungszustand zu berühren; und
(j) einem austauschbaren Dickenjustierungsring, der angeordnet ist, um zwischen die Grundplatten (15, 35) eingeschlossen zu werden, um die Dicke des Gießhohlraums (C) festzulegen,
**dadurch gekennzeichnet**, daß
der Dickenjustierungsring in der Form eines Hohlraumringes (71) abnehmbar an eine der Spiegeloberflächen-Platten (16, 36) in einer Weise angebracht ist, um sie gegen die andere der Spiegeloberflächen-Platten (16,36) zu schützen und um die andere Spiegeloberflächen-Platte zu berühren, und daß getrennt vom Hohlraumring (71) Anstoßposition-Justierungseinrichtungen zum Justieren der relativen Position der Führungsringe (18,38) im Formklemmungszustand entsprechend der Dicke des Dickenjustierungsringes vorgesehen sind.

2. Platten-Gießform nach Anspruch 1, wobei die Anstoßposition-Justierungseinrichtungen einen der Führungsringe (18,38) aufweisen, wobei dieser Führungsring entsprechend der Dicke des Hohlraumringes (71) durch einen anderen austauschbar ist.

3. Platten-Gießform nach Anspruch 1, wobei die Anstoßposition-Justierungseinrichtungen aus einem Führungsring-Abstandshalter (72,73) bestehen, der entfernbar zwischen einem der Führungsringe (18,38) und der entsprechenden Grundplatte (35,15) angeordnet ist.

4. Platten-Gießform nach Anspruch 1, wobei die Anstoßposition-Justierungseinrichtungen aus einem Führungsring-Abstandshalter (74a,74b) bestehen, der entfernbar zwischen den Führungsringen (18,38) angeordnet ist.

## Revendications

1. Matrice de moulage de disque comprenant :
(a) un plateau fixe,
(b) un plateau mobile disposé de façon à faire face audit plateau fixe et conçu pour être avancé et rétracté par un dispositif de serrage de matrices,
(c) une plaque de base fixe (15) fixée audit plateau fixe,
(d) une plaque de base mobile (35) fixée audit plateau mobile,
(e) une plaque de surface en miroir fixe (16) fixée à ladite plaque de base fixe (15),
(f) une plaque de surface en miroir mobile (36) fixée à ladite plaque de base mobile (35),
(g) une cavité de moule (C) existant, dans un état de serrage de la matrice, entre lesdites deux plaques de surface en miroir (16, 36),
(h) une bague de guidage fixe (18) fixée à ladite plaque de base fixe (15) de façon à entourer ladite plaque de surface en miroir fixe (16),
(i) une bague de guidage mobile (38) fixée à ladite plaque de base mobile (35) de façon à entourer ladite plaque de surface en miroir mobile (36) et conçue pour venir en contact avec ladite bague de guidage fixe (18) dans ledit état de serrage de la matrice, et
(j) une bague d'ajustement d'épaisseur remplaçable disposée pour être enfermée entre lesdites plaques de base (15, 35) afin de déterminer l'épaisseur de ladite cavité de moule (C),
**caractérisée**
**en ce que** ladite bague d'ajustement d'épaisseur, sous forme d'une bague de cavité (71), est fixée de façon amovible à l'une desdites plaques de surface en miroir (16, 36) d'une manière à faire saillie contre l'autre desdites plaques de surface en miroir (16, 36) et à venir en contact avec ladite autre plaque de surface en miroir, et
en ce que le moyen d'ajustement de la position en butée est prévu séparément de ladite bague de cavité (71) en vue d'ajuster la position relative desdites plaques de guidage (18, 38) dans ledit état de serrage de la matrice conformément à l'épaisseur de ladite bague d'ajustement d'épaisseur.

2. Matrice de moulage de disque selon la revendication 1, dans laquelle ledit moyen d'ajustement de position en butée comprend l'une desdites bagues de guidage (18, 38), cette bague de guidage pouvant être remplacée par une bague différente conformément à l'épaisseur de ladite bague de cavité (71).

3. Matrice de moulage de disque selon la revendication 1, dans laquelle ledit moyen d'ajustement de position en butée est constitué d'une entretoise de bague de guidage (72, 73) qui est disposée de façon amovible entre l'une desdites bagues de guidage (18, 38) et la plaque de base correspondante (35, 15).

4. Matrice de moulage de disque selon la revendication 1, dans laquelle ledit moyen d'ajustement de position en butée est constitué d'une entretoise de bague de guidage (74a, 74b) qui est disposée de façon amovible entre lesdites bagues de guidage (18, 38).
